# EUROPÄISCHE PATENTSCHRIFT

(11) **EP 3 836 773 B1**
(45) Veröffentlichungstag und Bekanntmachung des Hinweises auf die Patenterteilung: **13.08.2025**
(21) Anmeldenummer: 19752156.0
(22) Anmeldetag: 05.08.2019
(51) Int. Cl.: A01C 7/06, A01C 7/10, A01C 7/20, A01C 5/06

(54) **VERTEILMASCHINE FUER KÖRNIGES GUT**
DISPENSING MACHINE FOR A GRANULAR PRODUCT
MACHINE DE DISTRIBUTION DE PRODUITS GRANULAIRES

(30) Priorität: 17.08.2018 DE 102018120075
(43) Veröffentlichungstag der Anmeldung: 23.06.2021
(73) Patentinhaber: Amazonen-Werke H. Dreyer SE & Co. KG, 49205 Hasbergen (DE)
(72) Erfinder: WIEN, Thomas, 28816 Stuhr (DE); RADEKE, Jan Philipp, 27211 Bassum (DE)
(86) Internationale Anmeldenummer: PCT/EP2019/070972
(87) Internationale Veröffentlichungsnummer: WO 2020/035340

(56) Entgegenhaltungen:
- EP-A1- 3 047 718
- WO-A1-2014/183182
- DE-A1- 2 150 981
- DE-A1- 4 332 159
- DE-B1- 2 726 340

## Beschreibung

Die Erfindung betrifft eine Verteilmaschine für körniges Gut gemäß dem Oberbegriff des Patentanspruches 1 und wie bekannt aus WO 2014/183182 A1.

Eine als Sämaschine ausgeführte Verteilmaschine ist zudem in EP°3°047°718°B1 beschrieben. Diese Verteilmaschine dient zur Ausbringung von körnigem Gut. Neben Saatgut kann auch alternativ oder zusätzlich Dünger mit einer solchen Verteilmaschine ausgebracht werden. Hierzu umfasst die Verteilmaschine zumindest einen Vorratsbehälter. Der Vorratsbehälter kann ein großer Zentralbehälter mit entsprechend großem Fassungsvermögen sein, wie es von Drillmaschinen beispielsweise bekannt ist. In diesem Fall ist dem Vorratsbehälter eine Mehrzahl von Dosiereinrichtungen zur Förderung von körnigem Gut zugeordnet. Ebenso denkbar ist, dass die Verteilmaschine mehrere Vorratsbehälter umfasst, wobei die Vorratsbehälter ein kleineres Fassungsvermögen aufweisen, wie es bei Einzelkornsämaschinen, speziell von Mikrogranulatbehältern, beispielsweise bekannt ist. In diesem zweiten Fall ist jedem Vorratsbehälter zumindest eine Dosiereinrichtung zugeordnet.

Die Dosiereinrichtung umfasst hierbei zumindest ein Dosiergehäuse mit zumindest einem Zulauf, zumindest einem ersten Auslauf und zumindest einem zweiten Auslauf und darüber hinaus zumindest ein in dem Dosiergehäuse zwischen dem Zulauf einerseits und den Ausläufen andererseits angeordnetes und antreibbares Dosierrad. Durch die Drehung des Dosierrades wird über den Zulauf in das Dosiergehäuse eintretendes körniges Gut mitgenommen und so in Richtung der Ausläufe abgegeben. Bei dieser Verteilmaschine ist an dem ersten Auslauf des Dosiergehäuses eine das von der Dosiereinrichtung geförderte körnige Gut zum Boden leitende erste Förderleitung angeschlossen.

Des Weiteren ist in dem Dosiergehäuse eine Leitvorrichtung angeordnet. Mittels der Leitvorrichtung ist ein Förderkanal zwischen dem Zulauf einerseits und wahlweise dem ersten Auslauf oder dem zweiten Auslauf andererseits herstellbar. Hierzu befindet sich die Leitvorrichtung zwischen dem Dosierrad einerseits und den beiden Ausläufen andererseits.

Nachteilig bei dieser Verteilmaschine ist, dass eine der Schaltstellungen der Leitvorrichtung, nämlich die in der der Förderkanal zum zweiten Auslauf hergestellt ist, und folglich auch der zweite Auslauf des Dosiergehäuses ausschließlich für einen Kalibriervorgang der Dosiereinrichtung genutzt werden. Dieser Kalibriervorgang wird Abdrehen genannt und dient der Einstellung der Fördermenge der Dosiereinrichtung. Demzufolge bleibt nicht nur die Leitvorrichtung, sondern auch der zweite Auslauf nach dem einmalig für ein körniges Gut abzuschließenden Kalibriervorgang ungenutzt und kann nicht zur Ausbringung von körnigem Gut genutzt werden.

Die Aufgabe dieser Erfindung ist es daher, eine Verteilmaschine mit einer vielseitig nutzbaren Dosiereinrichtung für verschiedenartige Ablagemöglichkeiten des ausgebrachten Materials zu schaffen.

Diese Aufgabe wird darauf basierend gelöst, dass an dem zweiten Auslauf eine das von der Dosiereinrichtung geförderte körnige Gut zum Boden leitende zweite Förderleitung angeschlossen ist.

Infolge dieser Maßnahme kann nicht nur der erste Auslauf mit der daran angeschlossenen ersten Förderleitung zur Ausbringung von körnigem Gut genutzt werden, sondern in vorteilhafter analoger Weise der zweite Auslauf mit der daran angeschlossenen zweiten Förderleitung ebenso. Vorteilhaft ist hierbei auch, dass die Leitvorrichtung vielseitig eingesetzt werden kann, um zwischen der Förderung aus dem ersten und dem zweiten Auslauf zu variieren.

In einer vorteilhaften Weiterbildung der Erfindung ist vorgesehen, dass die Verteilmaschine zumindest ein vorzugsweise als Furchenbedeckungsrollen oder Andruckrad ausgeführtes Bodenbearbeitungswerkzeug umfasst, dass die erste Förderleitung an einem Bodenbearbeitungswerkzeug mündet, dass die zweite Förderleitung in Längsrichtung des Bodenbearbeitungswerkzeuges und/oder quer zur Längsrichtung des Bodenbearbeitungswerkzeuges beabstandet von der Mündung der ersten Förderleitung mündet. Unter der Längsrichtung des Bodenbearbeitungswerkzeuges kann hierbei die Längserstreckung der Verteilmaschine bzw. die Arbeitsrichtung der Verteilmaschine verstanden werden. Da mittels der Leitvorrichtung einstellbar ist, aus welchem Auslauf das körnige Gut gefördert wird, ist dem Benutzer in dieser Weiterbildung die Möglichkeit eröffnet sich zwischen der Ausbringung am Bodenbearbeitungswerkzeug oder beabstandet dazu entscheiden zu können. Die Verteilmaschine ist somit mit einer weiter vielseitigen Dosiereinrichtung geschaffen.

Die erfindungsgemäße Verteilmaschine ist ferner vorteilhaft dadurch weitergebildet, dass die Verteilmaschine dazu eingerichtet ist, über die erste Förderleitung gefördertes körniges Gut mittels eines Bodenbearbeitungswerkzeuges in den Boden einzuarbeiten. Für die Ausbringung einiger körniger Güter, so zum Beispiel Dünger, ist es vorteilhaft, diese im Boden abzulegen und danach mit Boden zu bedecken. Auch kann auf diese Weise eine räumliche Nähe zwischen ausgebrachtem körnigem Gut und zeitgleich in dem Boden abgelegtem Saatgut mittels der Förderung über die erste Förderleitung und Einarbeitung mittels des Bodenbearbeitungswerkzeuges hergestellt werden.

Erfindungsgemäß ist die Verteilmaschine dazu eingerichtet, über die zweite Förderleitung gefördertes körniges Gut auf der Bodenoberfläche auszubringen. Für die Ausbringung anderer körniger Güter, so zum Beispiel Schädlingsbekämpfungsmittel, ist es zielführend, diese so auszubringen, dass es gegen die zu bekämpfenden Schädlinge wirksam ist. Im Falle von Schnecken beispielsweise ist das Molluskizid idealerweise auf dem Boden auszubringen, so dass es von den Schnecken aufgenommen und gegen sie wirksam werden kann. Durch diese erfindungsgemäße Ausgestaltung ist es dem Benutzer so erlaubt auch auf solche Umwelteinflüsse zu reagieren und die Verteilmaschine mit der vortrefflich vielseitigen Dosiereinrichtung einzusetzen.

Die erfindungsgemäße Verteilmaschine ist ferner vorteilhaft dadurch weitergebildet, dass die erste Förderleitung dazu eingerichtet ist, körniges Gut von dem ersten Auslauf einerseits zu einem ersten Ausbringpunkt andererseits zu fördern, dass der erste Ausbringpunkt in Arbeitsrichtung eines Furchenbedeckers vor dem Furchenbedecker liegt. Infolge dieser vorteilhaften Anordnung ist sichergestellt, dass körniges Gut zuverlässig in den Boden eingearbeitet werden kann.

In einer weiteren zweckmäßigen Weiterbildung der Erfindung ist die zweite Förderleitung dazu eingerichtet, körniges Gut von dem zweiten Auslauf einerseits zu einem zweiten Ausbringpunkt andererseits zu fördern, dass der zweite Ausbringpunkt in Arbeitsrichtung einer Furchenbedeckungsrolle hinter oder neben der Furchenbedeckungsrolle liegt. Da durch den Furchenbedecker die bodenbewegende Bearbeitung des Feldes abgeschlossen ist, ist infolge dieser Maßnahme gewährleistet, dass an dem zweiten Ausbringpunkt ausgebrachtes körniges Gut nicht nachträglich unter einer Bodenschicht verschüttet oder teilweise von Erde bedeckt wird. Hierbei kann der zweite Ausbringpunkt entweder hinter oder neben dem Furchenbedecker angeordnet sein, da der Furchenbedecker den Boden zumindest annährend nur in seiner Arbeitsrichtung bewegt.

Zur Verbesserung der Handhabung der Verteilmaschine und insbesondere der Dosiereinrichtung ist in einer weiteren Weiterbildung vorgesehen, dass die Dosiereinrichtung einen auf die Leitvorrichtung einwirkenden Stellmechanismus umfasst, mittels welchem wählbar ist, zu welchem der beiden Ausläufe der Förderkanal hergestellt ist. Infolge dieser Maßnahme ist es möglich die Einstellung der Leitvorrichtung in besonders einfacher und zweckmäßiger Weise vorzunehmen. Ferner ist vorgesehen, dass der Stellmechanismus mittels geeigneter Mittel händisch, elektrisch, pneumatisch oder hydraulisch betätigbar ist. Der Stellmechanismus kann beispielsweise als Hebel ausgeführt sein, wobei dieser Hebel durch einen Handgriff oder einen elektrisch, pneumatisch oder hydraulischen Aktor betätigbar ist. Der Stellmechanismus kann fernbetätigbar sein, so dass der Benutzer der Verteilmaschine diesen beispielsweise von einem vor der Verteilmaschine angeordneten Ackerschlepper bedienen kann.

Die einer weiteren vorteilhaften Weiterbildung der Erfindung ist vorgesehen, dass die Verteilmaschine zumindest zwei Dosiereinrichtungen umfasst, wobei die Stellmechanismen der zumindest zwei Dosiereinrichtungen gemeinsam betätigbar sind. Es ist ebenso denkbar, dass die Stellmechanismen sämtlicher Dosiereinrichtungen der Verteilmaschine gemeinsam betätigbar sind. Vorteilhaft ist hierbei, dass sich in dieser Weiterbildung durch eine Aktion die Ausbringung sämtlicher Dosiereinrichtungen beeinflussen lässt. So ist die Handhabung nicht nur in besonders zweckmäßiger Weise vereinfacht, sondern auch vereinheitlicht, so dies vom Benutzer gewünscht ist.

Die erfindungsgemäße Verteilmaschine ist ferner vorteilhaft dadurch weitergebildet, dass die Leitvorrichtung als schwenkbare Leitklappe ausgeführt ist. Durch die als Leitklappe ausgeführte Leitvorrichtung lässt sich der Förderkanal besonders einfach wahlweise zwischen dem ersten oder zweiten Auslauf ausbilden. Diese Weiterbildung zeichnet sich folglich durch eine besonders einfache, robuste und Fehler unanfällige Bauart aus.

In einer weiteren vorteilhaften Weiterbildung der Erfindung sind dem Vorratsbehälter zwei Dosiereinrichtungen zugeordnet, wobei der Vorratsbehälter mittels eines Trennelementes in zwei separate Vorratsbereiche unterteilt ist und jedem der zwei separaten Vorratsbereiche eine Dosiereinrichtung zugeordnet ist. Infolge dieser Maßnahme ist der Vorratsbehälter mittels der separaten Vorratsbereiche dazu eingerichtet, zwei unterschiedliche körnige Güter zu bevorraten. Dadurch, dass jedem der Vorratsbereiche eine Dosiereinrichtung zugeordnet ist, lassen sich die zwei unterschiedliche körnige Güter gleichzeitig ausbringen. Eine weitere vorteilhafte Synergie entsteht dadurch, dass der Benutzer für jedes der beiden körnigen Güter entscheiden kann, wo er diese ausbringen will. So ist es beispielsweise möglich mittels einer der Dosiereinrichtungen über die erste Förderleitung Dünger in den Boden einzuarbeiten, während mittels der anderen Dosiereinrichtung über die zweite Förderleitung beispielsweise Schädlingsbekämpfungsmittel auf der Bodenoberfläche ausgebracht wird. Ebenso denkbar ist, dass die Stellmechanismen der beiden Dosiereinrichtungen so betätigt werden bzw. die Leitvorrichtungen die Förderkanäle so ausbilden, dass beide Dosiereinrichtungen zur Einarbeitung in den Boden fördern oder auf der Bodenoberfläche ausbringen. In diesem Fall ist es möglich unterschiedliche Dünger gleichzeitig in den Boden einzuarbeiten oder verschiedene Schädlingsbekämpfungsmittel zeitgleich auf dem Boden zu verteilen.

Weitere Einzelheiten der Erfindung sind der Beispielsbeschreibung und den Zeichnungen zu entnehmen. Die Zeichnungen zeigen
Fig.1 eine hinter einem Ackerschlepper angehangene Verteilmaschine in perspektivischer Ansicht,
Fig.2 ein Säaggregat mit einem erfindungsgemäßen Vorratsbehälter und einer Dosiereinrichtung in Seitenansicht,
Fig.3A der Vorratsbehälter und die Dosiereinrichtung mit einer Leitvorrichtung in Schnittansicht,
Fig.3B das Säaggregat mit der Dosiereinrichtung gemäß Fig.3A in Seitenansicht,
Fig.4A der Vorratsbehälter und die Dosiereinrichtung mit der Leitvorrichtung in einer weiteren Stellung in Schnittansicht,
Fig.4B das Säaggregat mit der Dosiereinrichtung gemäß Fig.4A in Seitenansicht,
Fig.5A ein weiteres Säaggregat mit einem anderen erfindungsgemäßen Vorratsbehälter und zwei Dosiereinrichtungen, und
Fig.5B der Vorratsbehälter gemäß Fig.5A in Schnittansicht und Draufsicht.

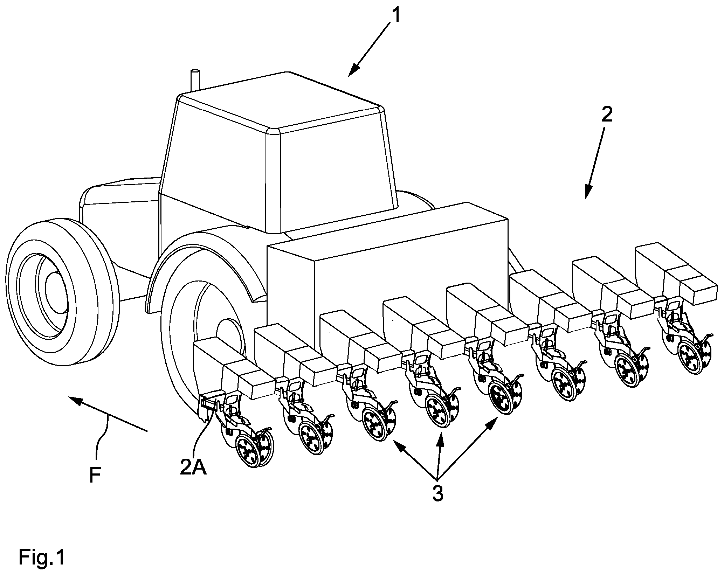

Ein Ackerschlepper 1 mit einer angehangenen als Einzelkornsämaschine 2 ausgeführten Verteilmaschine ist in Fig.1 gezeigt. Der Ackerschlepper 1 und die Einzelkornsämaschine 2 bewegen sich im Betrieb in Arbeitsrichtung F fort. Die Arbeitsrichtung F entspricht hierbei im Wesentlichen der Längserstreckung der Einzelkornsämaschine 2. Die Einzelkornsämaschine 2 bringt im Betrieb Saatgut und/oder Dünger oder dergleichen aus.

Zur Ausbringung solch körniger Güter, wie Saatgut und/oder Dünger und dergleichen, umfasst die Einzelkornsämaschine 2 an ihrem in Arbeitsrichtung F hinteren Ende eine Mehrzahl von quer zur Arbeitsrichtung F angeordneten Säaggregaten 3. Die Säaggregate 3 sind an einem Rahmen 2A der Einzelkornsämaschine 2 befestigt, wobei der Rahmen 2A sich für den Straßentransport auf die zulässige Gesamtbreite einklappen oder teleskopieren lässt. Zudem kann die Einzelkornsämaschine 2 hinter dem Ackerschlepper 1 ausgehoben werden.

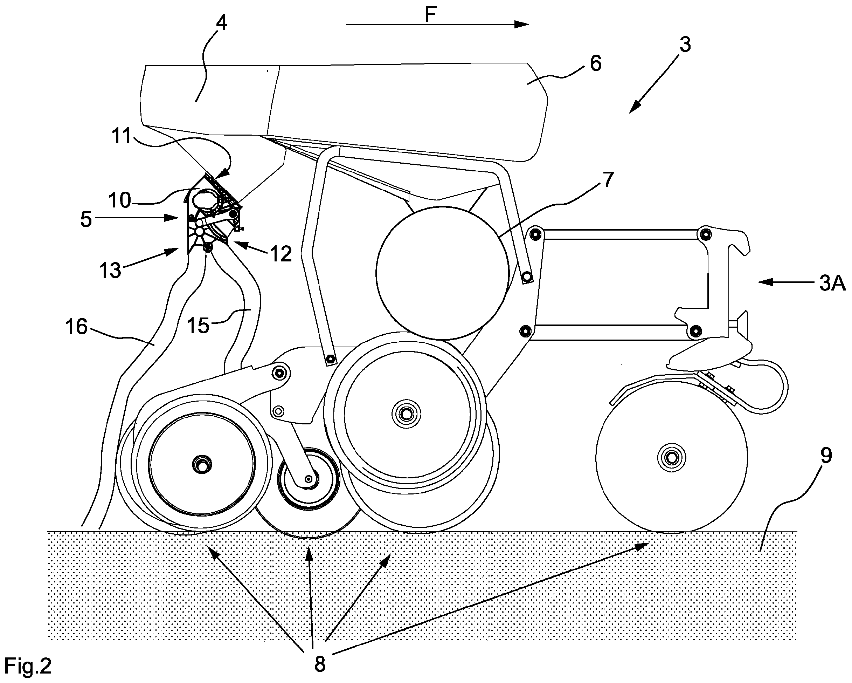

Ein Säaggregat 3 mit einem erfindungsgemäßen Vorratsbehälter 4 und einer dem Vorratsbehälter 4 zugeordneten Dosiereinrichtung 5 ist in Fig.2 in Seitenansicht gezeigt. Das Säaggregat 3 lässt sich mittels eines Anbauflansches 3A an dem Rahmen 2A befestigen und kann so im Betrieb in der Arbeitsrichtung F über ein Feld verbracht werden. Neben dem Vorratsbehälter 4 zur Bevorratung von körnigem Gut, umfasst das Säaggregat 3 an seinem oberen Ende einen Saatgutbehälter 6. An seinem unteren Ende umfasst das Säaggregat 3 diverse in Arbeitsrichtung F hintereinander angeordnete Bodenbearbeitungswerkzeuge 8. Der Saatgutbehälter 6 ist über eine Vereinzelungseinrichtung 7 und verdeckte Saatgutleitungen mit den Bodenbearbeitungswerkzeugen 8 verbunden, um Saatgut vereinzelt im Boden 9 abzulegen.

Die Dosiereinrichtung 5 umfasst ein Dosiergehäuse 10, welches über einen Zulauf 11 mit dem Vorratsbehälter 4 verbunden ist, wie in Fig.2 gezeigt ist. Über den Zulauf 11 kann körniges Gut aus dem Vorratsbehälter 4 in das Dosiergehäuse 10 eintreten. Ferner weist das Dosiergehäuse 10 einen ersten Auslauf 12 und einen zweiten Auslauf 13 an seinem unteren Ende auf. Zur Förderung von über den Zulauf 11 eintretendem körnigen Gut zu den beiden Ausläufen 12, 13 in einstellbaren Mengen ist in dem Dosiergehäuse 10 außerdem ein antreibbares Dosierrad 14 angeordnet. Dieses Dosierrad 14 ist zwischen Zulauf 11 und den Ausläufen 12, 13 angeordnet und sorgt in Rotation versetzt dafür, dass körniges Gut mitgenommen und an die Ausläufe 12, 13 abgegeben wird. Das an die Ausläufe 12, 13 abgegebene körnige Gut wird dann über jeweils eine Förderleitung 15, 16 zum Boden geleitet. Hierbei ist an dem ersten Auslauf 12 eine erste Förderleitung 15 und an dem zweiten Auslauf 13 eine zweite Förderleitung 16 angeschlossen.

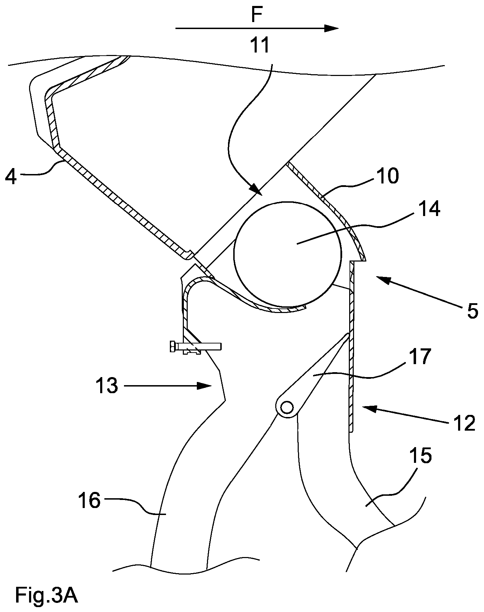

Der Vorratsbehälter 4 und die Dosiereinrichtung 5 sind in Fig.3A in einer Schnittansicht von der Seite gezeigt. Zwischen dem Dosierrad 14 und den beiden Ausläufen 12, 13 ist eine als Leitklappe 17 ausgeführte Leitvorrichtung angeordnet. Die Leitklappe 17 bildet wahlweise einen Förderkanal zu dem ersten Auslauf 12 oder dem zweiten Auslauf 13 aus. In einer nicht gezeigten Ausführungsform der Dosiereinrichtung umfasst die Leitklappe 17 einen Stellmechanismus, mittels welchem wählbar ist, zu welchem der beiden Ausläufe 12, 13 der Förderkanal hergestellt ist, wobei der Stellmechanismus mittels geeigneter Mittel händisch, elektrisch, pneumatisch oder hydraulisch betätigbar ist. In der in Fig.3A gezeigten Stellung stellt die Leitklappe 17 den Förderkanal zum zweiten Auslauf 13 her, so dass von der Dosiereinrichtung 5 gefördertes körniges Gut in die zweite Förderleitung 16 eingeleitet wird. Die Leitklappe 17 funktioniert also so, dass von dem Dosierrad 10 mitgenommenes körniges Gut auf die Leitklappe 17 rieselt, von wo aus es je nach Stellung der Leitklappe 17 dem ersten Auslauf 12 oder dem zweiten Auslauf 13 zugeleitet wird.

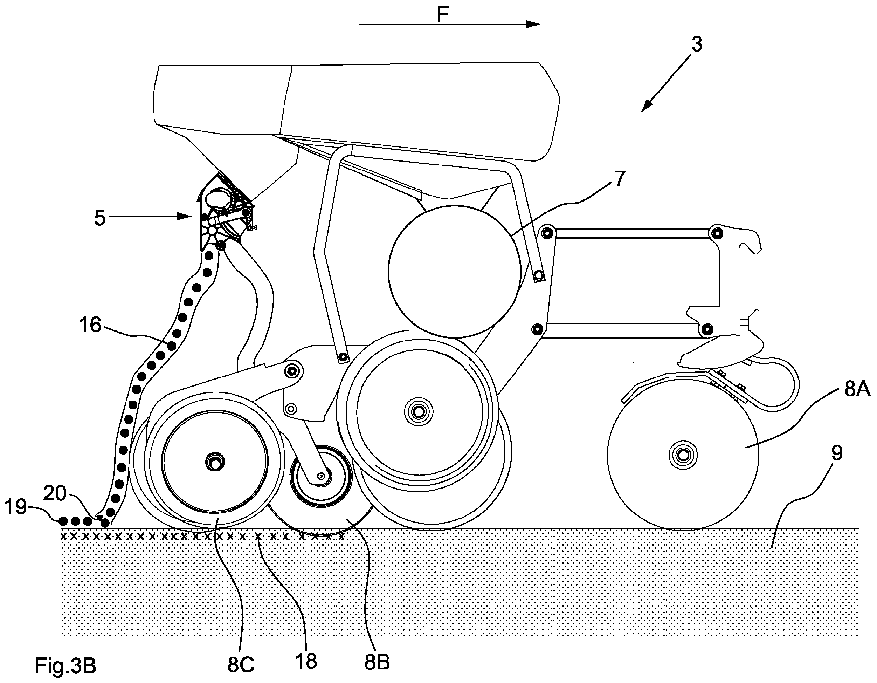

In Fig.3B sind das Säaggregat 3 und die Dosiereinrichtung 5 mit der Leitklappe 17 in der Stellung gemäß Fig.3A gezeigt. Das Säaggregat 3 umfasst seine diversen Bodenbearbeitungswerkzeuge 8 betreffend unter anderem einen Furchenöffner 8A, eine Andruckrolle 8B und Furchenbedeckungsrollen 8C. Im Betrieb der Einzelkornsämaschine 2 wird durch den Furchenöffner 8A zuerst eine Furche in den Boden 9 geformt. In diese Furche werden von der Vereinzelungseinrichtung 7 über entsprechende Saatgutleitungen vereinzelte Saatkörner 18 abgegeben. Die Saatkörner 18 werden anschließend von der Andruckrolle 8B überrollt und so in gewünschter Position im Boden fixiert. Abschließend wird die Furche dann durch die Furchenbedeckungsrollen 8C wieder mit Erde bedeckt, so dass der Bodenhorizont zumindest annährend geschlossen ist und die Saatkörner 18 bedeckt sind. Wie Fig.3B außerdem zeigt, mündet die an dem zweiten Auslauf 13 angeschlossene zweite Förderleitung 16 in Längsrichtung der Bodenbearbeitungswerkzeuge 8A, 8B, 8C bzw. in Arbeitsrichtung F hinter dem Säaggregat 3. Dies führt in Kombination mit der Stellung der Leitklappe 17 dazu, dass körniges Gut, hier angedeutet durch die Punkte 19, auf der Bodenoberfläche hinter der geschlossenen Furche ausgebracht wird. Die Mündung der zweiten Förderleitung 16 bildet somit einen zweiten Ausbringpunkt 20, welcher in Arbeitsrichtung F der Furchenbedeckungsrollen 8C hinter den Furchenbedeckungsrollen 8C liegt.

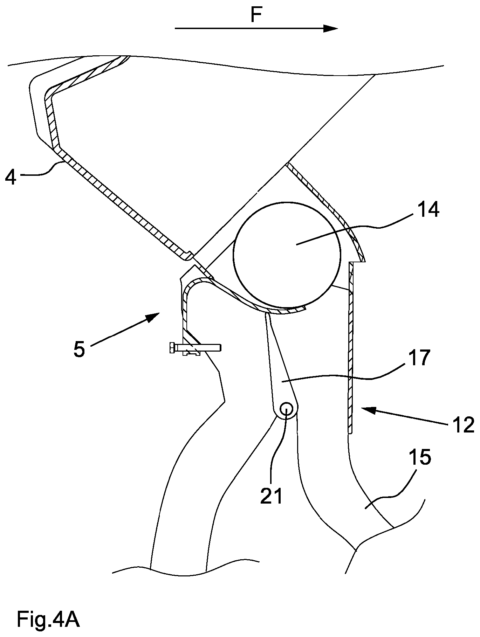

In Fig.4A ist der Vorratsbehälter 4 und die Dosiereinrichtung 5 mit der Leitklappe 17 in einer anderen Stellung in Schnittansicht gezeigt. Die Leitklappe 17 ist um eine Achse in dem Drehpunkt 21 verschwenkt, so dass der Förderkanal zum ersten Auslauf 12 ausgebildet ist. In dieser Stellung der Leitklappe 17 fördert die Dosiereinrichtung 5 körniges Gut über die erste Förderleitung 15 zum Boden.

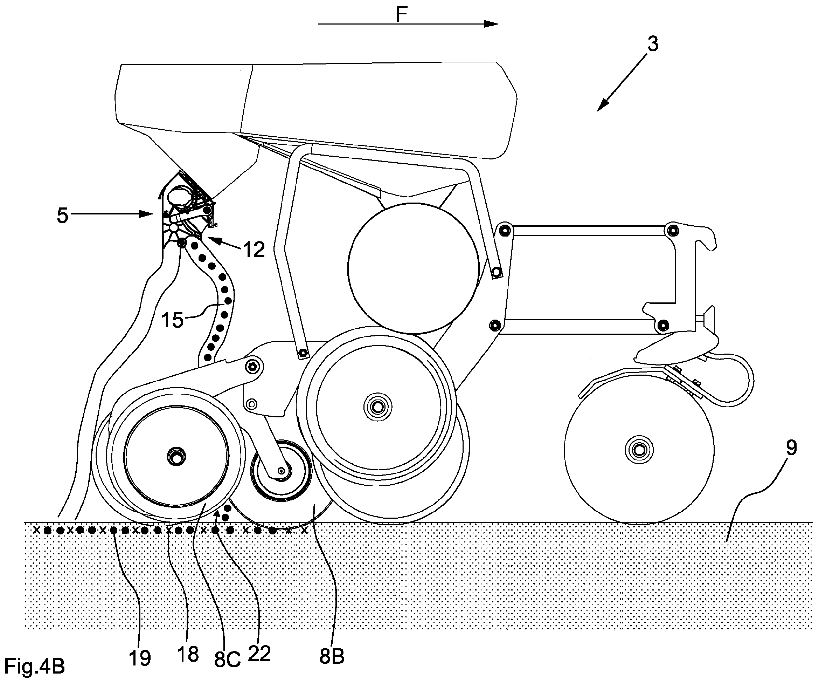

In Fig.4B sind das Säaggregat 3 und die Dosiereinrichtung 5 mit der Leitklappe 17 in der Stellung gemäß Fig.4A gezeigt. Die an dem ersten Auslauf 12 angeschlossene erste Förderleitung 15 mündet in verdeckter Weise zwischen der Andruckrolle 8B und den Furchenbedeckungsrollen 8C über der noch offenen Furche. Die Mündung der ersten Förderleitung 15 bildet somit einen ersten Ausbringpunkt 22, welcher in Arbeitsrichtung F vor den Furchenbedeckungsrollen 8C liegt. Die Anordnung der ersten Förderleitung 15 erlaubt es, über die erste Förderleitung 15 gefördertes körniges Gut, hier ebenfalls angedeutet durch die Punkte 19, in die Furche abzugeben, wo es von den Furchenbedeckungsrollen 8C anschließend mit Erde bedeckt und so in den Boden eingearbeitet wird. Vorteilhaft eingesetzt werden kann dies, um Dünger in unmittelbar räumlicher Nähe zu den Saatkörnern 18 in den Boden einzuarbeiten.

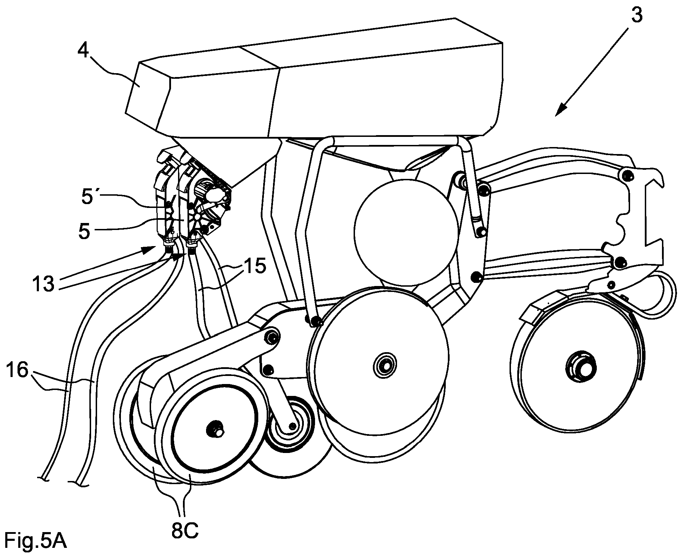

Ein anderes Säaggregat 3 mit einem weiteren erfindungsgemäßen Vorratsbehälter 4 ist in Fig.5A in perspektivischer Ansicht gezeigt. Dieses Säaggregat 3 zeichnet sich dadurch aus, dass dem Vorratsbehälter 4 zwei Dosiereinrichtungen 5, 5' zugeordnet sind. Die beiden Dosiereinrichtungen 5, 5' sind jeweils wie in vorstehend beschriebener Weise mit ersten und zweiten Förderleitungen 15, 16 an ihren Ausläufen 12, 13 ausgestattet und umfassen eine Leitklappe 17. Es ist vorstellbar, dass nicht gezeigte auf die Leitklappe 17 einwirkende Stellmechanismen der beiden Dosiereinrichtungen 5, 5' gemeinsam betätigbar sind. Bei diesem Säaggregat 3 sind die Leitklappen 17 der beiden Dosiereinrichtungen 5, 5' unabhängig voneinander einstellbar, so dass folgende Ausbringvarianten bestehen:
- beide Dosiereinrichtungen 5, 5' fördern über die erste Förderleitung 15, so dass das körnige Gut mittels der Furchenbedeckungsrollen 8C in den Boden eingearbeitet wird,
- beide Dosiereinrichtungen 5, 5' fördern über die zweite Förderleitung 16, so dass das körnige Gut auf der Bodenoberfläche ausgebracht wird, oder
- eine Dosiereinrichtung 5 fördert über die erste Förderleitung 15, während die andere Dosiereinrichtung 5' über die zweite Förderleitung 16 fördert, so dass körniges Gut in den Boden eingearbeitet und auf der Bodenoberfläche ausgebracht wird.
Natürlich ist auch denkbar, dass nur eine der beiden Dosiereinrichtungen 5, 5' betrieben wird.

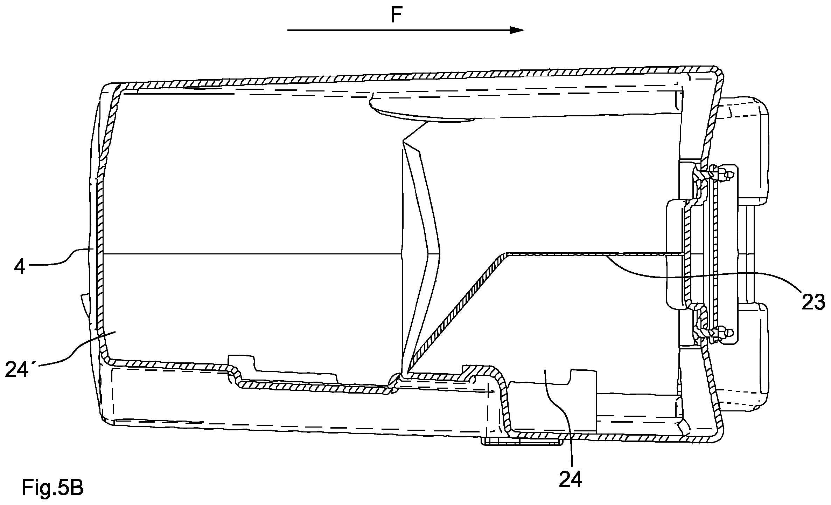

Die vorstehend beschriebenen Ausbringvarianten erscheinen besonders vorteilhaft bei der Betrachtung von Fig.5B, wo der Vorratsbehälter 4 gemäß Fig.5A in Schnittansicht von oben gezeigt ist. Im Innern des Vorratsbehälters 4 ist ein als aufrechte Trennwand 23 ausgeführtes Trennelement angeordnet. Die Trennwand 23 verläuft mittig vom vorderen Ende des Vorratsbehälters 4 entgegen der Arbeitsrichtung F nach hinten bevor sie nach etwa ein Drittel der Länge des Vorratsbehälters 4 unter circa 45 Grad zur rechten Seitenwand des Vorratsbehälters 4 abknickt und den Vorratsbehälter 4 so in die zwei separate Vorratsbereiche 24, 24' unterteilt. Die Trennwand 23 und die Dosiereinrichtungen 5, 5' sind so zueinander angeordnet, dass körniges Gut aus dem Vorratsbereich 24 nur in die eine Dosiereinrichtung 5 gelangt, während körniges Gut aus dem Vorratsbereich 24' nur in die andere Dosiereinrichtung 5' gelangt. In besonders vorteilhafter Weise kann so für unterschiedliche körnige Güter die Ausbringvariante angepasst gestaltet werden: Schädlingsbekämpfungsmittel können von der einen Dosiereinrichtung 5 über die zweite Förderleitung 16 auf der Bodenoberfläche ausgebracht werden, beispielsweise aus Vorratsbereich 24, während die Dosiereinrichtung 5' Dünger aus Vorratsbereich 24' über die erste Förderleitung 15 in der Furche ablegt, wo der Dünger in den Boden 9 eingearbeitet wird.

### Bezugszeichenliste

- 1: Ackerschlepper
- 2: Einzelkornsämaschine
- 2A: Rahmen
- F: Arbeitsrichtung
- 3: Säaggregat
- 3A: Anbauflansch
- 4: Vorratsbehälter
- 5, 5': Dosiereinrichtung
- 6: Saatgutbehälter
- 7: Vereinzelungseinrichtung
- 8: Bodenbearbeitungswerkzeug
- 8A: Furchenöffner
- 8B: Andruckrolle
- 8C: Furchenbedeckungsrolle
- 9: Boden
- 10: Dosiergehäuse
- 11: Zulauf
- 12: erster Auslauf
- 13: zweiter Auslauf
- 14: Dosierrad
- 15: erste Förderleitung
- 16: zweite Förderleitung
- 17: Leitklappe
- 18: Saatkörner
- 19: Punkte (körniges Gut)
- 20: zweiter Ausbringpunkt
- 21: Drehpunkt
- 22: erster Ausbringpunkt
- 23: Trennwand
- 24, 24': separater Vorratsbereich

## Patentansprüche

1. Verteilmaschine (2) für körniges Gut, wie Saatgut und/oder Dünger, mit zumindest einem Vorratsbehälter (4), wobei dem Vorratsbehälter (4) zumindest eine Dosiereinrichtung (5, 5') zur Förderung von körnigem Gut in einstellbaren Mengen zugeordnet ist, wobei die Dosiereinrichtung (5, 5') zumindest ein Dosiergehäuse (10) mit zumindest einem Zulauf (11), zumindest einem ersten Auslauf (12) und zumindest einem zweiten Auslauf (13), zumindest ein in dem Dosiergehäuse (10) zwischen dem Zulauf (11) einerseits und den Ausläufen (12, 13) andererseits angeordnetes und antreibbares Dosierrad (14) umfasst, wobei an dem ersten Auslauf (12) des Dosiergehäuses (10) eine das von der Dosiereinrichtung (5) geförderte körnige Gut zum Boden leitende erste Förderleitung (15) angeschlossen ist, wobei zwischen dem Dosierrad (14) einerseits und den beiden Ausläufen (12, 13) andererseits eine Leitvorrichtung (17) angeordnet ist, mittels welcher ein Förderkanal zwischen dem Zulauf (11) einerseits und wahlweise dem ersten Auslauf (12) oder dem zweiten Auslauf (13) andererseits herstellbar ist, und wobei an dem zweiten Auslauf (13) eine das von der Dosiereinrichtung (5) geförderte körnige Gut zum Boden leitende zweite Förderleitung (16) angeschlossen ist, **dadurch gekennzeichnet, dass** die Verteilmaschine (2) dazu eingerichtet ist, über die zweite Förderleitung (16) gefördertes körniges Gut auf der Bodenoberfläche auszubringen.

2. Verteilmaschine (2) nach Anspruch 1, **dadurch gekennzeichnet, dass** die Verteilmaschine (2) zumindest ein vorzugsweise als Furchenbedeckungsrollen (8C) oder Andruckrad (8B) ausgeführtes Bodenbearbeitungswerkzeug (8) umfasst, dass die erste Förderleitung (15) an einem Bodenbearbeitungswerkzeug (8) mündet, dass die zweite Förderleitung (16) in Längsrichtung des Bodenbearbeitungswerkzeuges (8) und/oder quer zur Längsrichtung des Bodenbearbeitungswerkzeuges (8) beabstandet von der Mündung der ersten Förderleitung (15) mündet.

3. Verteilmaschine (2) nach zumindest einem der vorstehenden Ansprüche, **dadurch gekennzeichnet, dass** die Verteilmaschine (2) dazu eingerichtet ist, über die erste Förderleitung (15) gefördertes körniges Gut mittels eines Bodenbearbeitungswerkzeuges (8) in den Boden einzuarbeiten.

4. Verteilmaschine (2) nach zumindest einem der vorstehenden Ansprüche, **dadurch gekennzeichnet, dass** die erste Förderleitung (15) dazu eingerichtet ist, körniges Gut von dem ersten Auslauf (12) einerseits zu einem ersten Ausbringpunkt (22) andererseits zu fördern, dass der erste Ausbringpunkt (22) in Arbeitsrichtung (F) einer Furchenbedeckungsrolle (8C) vor der Furchenbedeckungsrolle (8C) liegt.

5. Verteilmaschine (2) nach zumindest einem der vorstehenden Ansprüche, **dadurch gekennzeichnet, dass** die zweite Förderleitung (16) dazu eingerichtet ist, körniges Gut von dem zweiten Auslauf (13) einerseits zu einem zweiten Ausbringpunkt (20) andererseits zu fördern, dass der zweite Ausbringpunkt (20) in Arbeitsrichtung (F) einer Furchenbedeckungsrolle (8C) hinter oder neben der Furchenbedeckungsrolle (8C) liegt.

6. Verteilmaschine (2) nach zumindest einem der vorstehenden Ansprüche, **dadurch gekennzeichnet, dass** die Dosiereinrichtung (5) einen auf die Leitvorrichtung (17) einwirkenden Stellmechanismus umfasst, mittels welchem wählbar ist, zu welchem der beiden Ausläufe (12, 13) der Förderkanal hergestellt ist, dass der Stellmechanismus mittels geeigneter Mittel händisch, elektrisch, pneumatisch oder hydraulisch betätigbar ist.

7. Verteilmaschine (2) nach zumindest einem der vorstehenden Ansprüche, **dadurch gekennzeichnet, dass** die Verteilmaschine (2) zumindest zwei Dosiereinrichtungen (5, 5') umfasst, dass die Stellmechanismen der zumindest zwei Dosiereinrichtungen (5, 5') gemeinsam betätigbar sind.

8. Verteilmaschine (2) nach zumindest einem der vorstehenden Ansprüche, **dadurch gekennzeichnet, dass** die Leitvorrichtung (17) als schwenkbare Leitklappe (17) ausgeführt ist.

9. Verteilmaschine (2) nach zumindest einem der vorstehenden Ansprüche, **dadurch gekennzeichnet, dass** dem Vorratsbehälter (4) zwei Dosiereinrichtungen (5, 5') zugeordnet sind, dass der Vorratsbehälter (4) mittels eines Trennelementes (23) in zwei separate Vorratsbereiche (24, 24') unterteilt ist, dass jedem der zwei separaten Vorratsbereiche (24, 24') eine Dosiereinrichtung (5, 5') zugeordnet ist.

## Claims

1. Distribution machine (2) for granular material, such as seed and/or fertilizer, comprising at least one storage container (4), at least one metering device (5, 5') for conveying granular material in adjustable quantities being assigned to the storage container (4), the metering device (5, 5') comprising at least one metering housing (10) that has at least one inlet (11), at least one first outlet (12) and at least one second outlet (13), at least one drivable metering wheel (14) arranged in the metering housing (10) between the inlet (11) on one side and the outlets (12, 13) on the other side, a first conveying line (15) being connected to the first outlet (12) of the metering housing (10) and conveying the granular material conveyed by the metering device (5) to the soil, a guide device (17) being arranged between the metering wheel (14) on one side and the two outlets (12, 13) on the other side, by means of which guide device a conveying channel can be produced between the inlet (11) on one side and optionally the first outlet (12) or the second outlet (13) on the other side, and a second conveying line (16) that guides the granular material conveyed by the metering device (5) to the soil being connected to the second outlet (13), **characterized in that** the distribution machine (2) is designed to spread granular material conveyed via the second conveying line (16) onto the soil surface.

2. Distribution machine (2) according to claim 1, **characterized in that** the distribution machine (2) comprises at least one soil-cultivating tool (8), preferably designed as furrow covering rollers (8C) or a pressure wheel (8B), **in that** the first conveying line (15) opens at a soil-cultivating tool (8), **in that** the second conveying line (16) opens in the longitudinal direction of the soil-cultivating tool (8) and/or transversely to the longitudinal direction of the soil-cultivating tool (8) at a distance from the opening of the first conveying line (15).

3. Distribution machine (2) according to at least one of the preceding claims, **characterized in that** the distribution machine (2) is designed to work granular material conveyed via the first conveying line (15) into the soil by means of a soil-cultivating tool (8).

4. Distribution machine (2) according to at least one of the preceding claims, **characterized in that** the first conveying line (15) is designed to convey granular material from the first outlet (12) on one side to a first discharge point (22) on the other side, **in that** the first discharge point (22) is located in front of the furrow covering roller (8C) in the working direction (F) of a furrow covering roller (8C).

5. Distribution machine (2) according to at least one of the preceding claims, **characterized in that** the second conveying line (16) is designed to convey granular material from the second outlet (13) on one side to a second discharge point (20) on the other side, **in that** the second discharge point (20) is located behind or next to the furrow covering roller (8C) in the working direction (F) of a furrow covering roller (8C).

6. Distribution machine (2) according to at least one of the preceding claims, **characterized in that** the metering device (5) comprises an adjusting mechanism acting on the guide device (17), by means of which it is possible to select to which of the two outlets (12, 13) the conveying channel is produced, **in that** the adjusting mechanism can be actuated manually, electrically, pneumatically or hydraulically by means of suitable means.

7. Distribution machine (2) according to at least one of the preceding claims, **characterized in that** the distribution machine (2) comprises at least two metering devices (5, 5'), **in that** the adjusting mechanisms of the at least two metering devices (5, 5') can be actuated jointly.

8. Distribution machine (2) according to at least one of the preceding claims, **characterized in that** the guide device (17) is designed as a pivoting guide valve (17).

9. Distribution machine (2) according to at least one of the preceding claims, **characterized in that** two metering devices (5, 5') are assigned to the storage container (4), **in that** the storage container (4) is divided into two separate storage regions (24, 24') by means of a separating element (23), **in that** a metering device (5, 5') is assigned to each of the two separate storage regions (24, 24').

## Revendications

1. Machine de distribution (2) de produit granulaire tel que des semences et/ou des engrais, comportant au moins un réservoir de réserve (4), dans laquelle au moins un appareil de dosage (5, 5') est associé au réservoir de réserve (4) pour le transport de produit granulaire dans des quantités réglables, dans laquelle l'appareil de dosage (5, 5') comprend au moins un boîtier de dosage (10) comportant au moins une entrée (11), au moins une première sortie (12) et au moins une seconde sortie (13), au moins une roue de dosage (14) pouvant être entraînée et disposée dans le boîtier de dosage (10) entre l'entrée (11) d'une part et les sorties (12, 13) d'autre part, dans laquelle une première conduite de transport (15) guidant vers le sol le produit granulaire transporté par l'appareil de dosage (5) est raccordée à la première sortie (12) du boîtier de dosage (10), dans laquelle un dispositif de guidage (17) est disposé entre la roue de dosage (14) d'une part et les deux sorties (12, 13) d'autre part, dispositif de guidage au moyen duquel un canal de transport peut être établi entre l'entrée (11) d'une part et, sélectivement, la première sortie (12) ou la seconde sortie (13) d'autre part, et dans laquelle une seconde conduite de transport (16) guidant vers le sol le produit granulaire transporté par l'appareil de dosage (5) est raccordée à la seconde sortie (13), **caractérisée en ce que** la machine de distribution (2) est conçue pour épandre sur la surface de sol le produit granulaire transporté par la seconde conduite de transport (16).

2. Machine de distribution (2) selon la revendication 1, **caractérisée en ce que** la machine de distribution (2) comprend au moins un outil de travail du sol (8) réalisé de préférence sous forme de rouleaux de recouvrement de sillon (8C) ou de roue plombeuse (8B), **en ce que** la première conduite de transport (15) débouche sur un outil de travail du sol (8), **en ce que** la seconde conduite de transport (16) débouche, dans la direction longitudinale de l'outil de travail du sol (8) et/ou transversalement à la direction longitudinale de l'outil de travail du sol (8), à distance de l'embouchure de la première conduite de transport (15).

3. Machine de distribution (2) selon au moins l'une des revendications précédentes, **caractérisée en ce que** la machine de distribution (2) est conçue pour incorporer dans le sol, par le biais d'un outil de travail du sol (8), du produit granulaire transporté par la première conduite de transport (15).

4. Machine de distribution (2) selon au moins l'une des revendications précédentes, **caractérisée en ce que** la première conduite de transport (15) est conçue pour transporter du produit granulaire de la première sortie (12) d'une part vers un premier point d'épandage (22) d'autre part, **en ce que** le premier point d'épandage (22) est situé en amont d'un rouleau de recouvrement de sillon (8C) dans la direction de travail (F) de ce rouleau de recouvrement de sillon (8C).

5. Machine de distribution (2) selon au moins l'une des revendications précédentes, **caractérisée en ce que** la seconde conduite de transport (16) est conçue pour transporter du produit granulaire de la seconde sortie (13) d'une part vers un second point d'épandage (20) d'autre part, **en ce que** le second point d'épandage (20) se trouve derrière ou à côté d'un rouleau de recouvrement de sillon (8C) dans la direction de travail (F) de ce rouleau de recouvrement de sillon (8C).

6. Machine de distribution (2) selon au moins l'une des revendications précédentes, **caractérisée en ce que** l'appareil de dosage (5) comprend un mécanisme de réglage agissant sur le dispositif de guidage (17), mécanisme de réglage par le biais duquel il est possible de choisir vers laquelle des deux sorties (12, 13) le canal de transport est établi, **en ce que** le mécanisme de réglage peut être actionné manuellement, électriquement, pneumatiquement ou hydrauliquement par le biais de moyens appropriés.

7. Machine de distribution (2) selon au moins l'une des revendications précédentes, **caractérisée en ce que** la machine de distribution (2) comprend au moins deux appareils de dosage (5, 5'), **en ce que** les mécanismes de réglage des au moins deux appareils de dosage (5, 5') peuvent être actionnés ensemble.

8. Machine de distribution (2) selon au moins l'une des revendications précédentes, **caractérisée en ce que** le dispositif de guidage (17) est réalisé sous la forme d'un clapet de guidage (17) pivotant.

9. Machine de distribution (2) selon au moins l'une des revendications précédentes, **caractérisée en ce que** deux appareils de dosage (5, 5') sont associés au réservoir de réserve (4), **en ce que** le réservoir de réserve (4) est divisé en deux zones de réserve (24, 24') séparées par le biais d'un élément de séparation (23), **en ce qu'**un appareil de dosage (5, 5') est associé à chacune des deux zones de réserve (24, 24') séparées.
